# EUROPEAN PATENT APPLICATION

(11) **EP 2 447 813 A2**
(43) Date of publication of application: **02.05.2012**
(21) Application number: 11186587.9
(22) Date of filing: 25.10.2011
(51) Int. Cl.: G06F 3/041

(54) **Liquid crystal display with built-in touch screen panel**

(30) Priority: 29.10.2010 KR 20100106736
(71) Applicant: Samsung Mobile Display Co., Ltd., Yongin-city, Gyunggi-do 446-771 (KR)
(72) Inventor: Jun, Sang-Hyun, Chungcheongnam-do (KR); Cho, Se-Il, Chungcheongnam-do (KR); Song, Sung-Hoon, Chungcheongnam-do (KR); Rho, Soo-Guy, Chungcheongnam-do (KR)
(74) Representative: Mounteney, Simon James

(57) **Abstract**

A liquid crystal display (LCD) having a built-in touch screen panel includes a first substrate having a plurality of pixels, wherein each of the pixels comprises a thin film transistor and a pixel electrode; a plurality of common electrode patterns corresponding to the pixel electrodes and spaced from each other along a second direction; a second substrate facing the first substrate, the second substrate having color filter patterns, wherein the color filter patterns are arranged to correspond to the pixels; a plurality of black matrix patterns between the color filter patterns, the plurality of black matrix patterns being spaced from each other along a first direction crossing the second direction; and a liquid crystal layer between the first and second substrates, wherein the plurality of common electrode patterns and at least one of the black matrix patterns are used as driving electrodes and sensing electrodes, respectively.

## Description

### BACKGROUND

### 1. Field

The present invention relates to a liquid crystal display (LCD).

### 2. Description of Related Art

A touch screen panel is an input device that allows a user's instructions to be inputted using the user's hand or an object, by selecting instruction content displayed on a screen of an image display or the like. The user's hand or object is directly in contact with the touch screen panel at a contact position.

To this end, a touch screen panel is formed on a front face of an image display, to convert the contact position into an electrical signal. Accordingly, the instruction content selected at the contact position can be inputted as an input signal to the image display.

Since such a touch screen panel can be substituted for a separate input device connected to an image display, such as a keyboard or mouse, its application fields have been increasingly extended.

Touch screen panels can be classified into different types such as resistive overlay touch screen panels, photosensitive touch screen panels, capacitive touch screen panels, and the like. A capacitive touch screen panel converts a contact position into an electrical signal by sensing a change in capacitance formed between a conductive sensing pattern and an adjacent sensing pattern, ground electrode or the like, when a user's hand or object is in contact with the touch screen panel.

Such a touch screen panel is generally attached to an outer surface of a flat panel display such as a liquid crystal display or organic light emitting display, so as to be implemented as a product.

However, when a touch screen panel is attached to an outer face of a flat panel display, it may be necessary to provide an adhesive layer between the touch screen panel and the flat panel display, and a process of forming the touch screen panel may need to be separately performed. Therefore, processing time and cost may be increased.

Further, in a conventional structure, the touch screen panel is attached to an outer surface of the flat panel display, and therefore, the entire thickness of the flat panel display is increased.

### SUMMARY

The present invention sets out to provide a liquid crystal display (LCD) with a built-in touch screen panel, which can be implemented without an additional process, by using common electrode patterns and black matrix patterns provided to the LCD as electrodes of the touch screen panel.

The present invention also sets out to provide an LCD having a built-in touch screen panel, in which adjacent color filter patterns are formed to be overlapped with each other in an open region between black matrix patterns, so that it is possible to overcome the problem of image quality degradation generated in the open region.

Aspects of embodiments of the present invention provide a liquid crystal display (LCD) having a built-in touch screen panel, the LCD including a first substrate having a plurality of pixels, wherein each of the pixels comprises a thin film transistor and a pixel electrode; a plurality of common electrode patterns corresponding to the pixel electrodes and spaced from each other along a second direction; a second substrate facing the first substrate, the second substrate having color filter patterns, wherein the color filter patterns are arranged to correspond to the pixels; a plurality of black matrix patterns between the color filter patterns, the plurality of black matrix patterns being spaced from each other along a first direction crossing the second direction; and a liquid crystal layer between the first and second substrates, wherein the plurality of common electrode patterns and at least one of the black matrix patterns are used as driving electrodes and sensing electrodes, respectively.

The black matrix patterns may include first black matrix patterns and dummy black matrix patterns between the first black matrix patterns. The dummy black matrix patterns may be maintained in a floating state, or a ground voltage (GND) may be applied to the dummy black matrix patterns.

The LCD may further include voltage application pads coupled to the plurality of common electrode patterns; and voltage detection pads coupled to the first black matrix patterns. At least one of the voltage application pads or the voltage detection pads may be on a surface of the second substrate facing the first substrate.

At least one of the voltage application pads or the voltage detection pads may be electrically connected to a metal pattern on the first substrate through a sealing member.

The sealing member comprises a conductive material, and one side of the conductive material may contact a corresponding one of the pads and another side of the conductive material may contact the metal pattern. The conductive material may include a conducting ball.

The metal pattern may be electrically connected to a flexible printed circuit board attached to one surface of the first substrate.

The first black matrix patterns may be between adjacent ones of the color filter patterns, and may be configured to be implemented as black matrix lines that are spaced from each other along the first direction. Two or more of the black matrix lines may be coupled to a same voltage application pad so as to be operated as one sensing electrode.

The first black matrix patterns may include an opaque conductive material, and the dummy black matrix patterns comprise an opaque conductive material or opaque organic material. The opaque conductive material may include chrome (Cr) or chrome oxide (CrOx).

Adjacent ones of the color filter patterns may be overlapped with each other in an open region between the black matrix patterns.

The LCD may further include an additional black matrix pattern made of a non-conductive organic material formed in an open region between the black matrix patterns so as to be overlapped with the open region.

The plurality of common electrode patterns may be on the second substrate. The color filter patterns between the plurality of common electrode patterns and the plurality of black matrix patterns may serve as a dielectric substance.

The plurality of common electrode patterns may be on the first substrate. At least one slit may be at a region of the common electrode patterns corresponding to the pixel electrode of each of the pixels.

The liquid crystal layer may be between the plurality of common electrode patterns and the black matrix patterns, and may serve as a dielectric substance.

The LCD may be configured to perform an operation of displaying an image during a first frame period, and to perform an operation of recognizing a touch during a second frame period, and a same voltage may applied to the common electrode patterns during the first frame period and a driving signal may be sequentially applied to the common electrode patterns during the second frame period. The first and second frame periods may be sequentially and repeatedly operated.

As described above, according to embodiments of the present invention, common electrode patterns and black matrix patterns formed in an LCD may be used as electrodes of a touch screen panel, so that it is possible to implement an LCD having a built-in touch screen panel without an additional process. Also, adjacent color filter patterns may be formed to be overlapped with each other in an open region between black matrix patterns, so that it is possible to overcome the problem of image quality degradation generated in the open region.

At least some of the above and other features of the invention are set out in the claims.

### BRIEF DESCRIPTION OF THE DRAWINGS

The accompanying drawings, together with the following description, illustrate embodiments of the present invention, and serve to explain the principles of the present invention.

FIG. 1 is a sectional view illustrating one area of a liquid crystal display (LCD) having a built-in touch screen panel according to an embodiment of the present invention.

FIG. 2 is a perspective view illustrating the structure of common electrode patterns and black matrix patterns in the LCD illustrated in FIG. 1.

FIG. 3 is a sectional view illustrating one area of an LCD having a built-in touch screen panel according to another embodiment of the present invention.

FIG. 4 is a perspective view illustrating the structure of common electrode patterns and black matrix patterns in the LCD illustrated in FIG. 3.

FIG. 5A is a sectional view of a sensing cell in a normal state (or no touch condition).

FIG. 5B is a view schematically showing a sensed result based on a driving signal applied to sensing cells such as the sensing cell shown in FIG. 5A.

FIG. 6A is a sectional view of a sensing cell in the condition of being contacted by a finger.

FIG. 6B is a view schematically showing a sensed result based on a driving signal applied to sensing cells such as the sensing cell shown in FIG. 6A.

FIG. 7 is a plan view illustrating a second substrate in an LCD having a built-in touch screen panel according to an embodiment of the present invention.

FIG. 8 is a sectional view taken along the line II-II' of FIG. 7 illustrating a specific area, i.e., an electrical connection between a voltage application pad and a metal pattern of a first substrate according to an embodiment of the present invention.

FIGS. 9A and 9B are views illustrating shapes of black matrix patterns according to an embodiment of the present invention.

FIGS. 10A to 10C are views illustrating shapes of black matrix patterns according to another embodiment of the present invention.

FIGS. 11A and 11 B are views illustrating shapes of black matrix patterns according to still another embodiment of the present invention.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" or "coupled to" another element, it can be directly connected to the another element or be indirectly connected to the another element with one or more intervening elements interposed therebetween. Hereinafter, like reference numerals refer to like elements.

An LCD is a display that displays an image using the optical anisotropy and polarizing properties of liquid crystals. Liquid crystals having a thin and long molecular structure have optical anisotropy in which the molecular arrangement of the liquid crystals is directionally oriented, and a polarizing property in which the molecular arrangement direction of the liquid crystals changes in an electric field according to their sizes.

Accordingly, an LCD includes a liquid crystal panel as an essential component. Here, the liquid crystal panel may be configured by joining a first substrate (e.g., an array substrate) and a second substrate (e.g., a color filter substrate) having pixel electrodes and a common electrode, respectively. The pixel electrodes and common electrode are formed on surfaces opposite each other, with a liquid crystal layer interposed therebetween. The LCD is a non-luminescent device that artificially controls the arrangement direction of liquid crystal molecules through a change in an electric field between the pixel and common electrodes, and displays various images using a transmittance of light that is varied (or changed) accordingly.

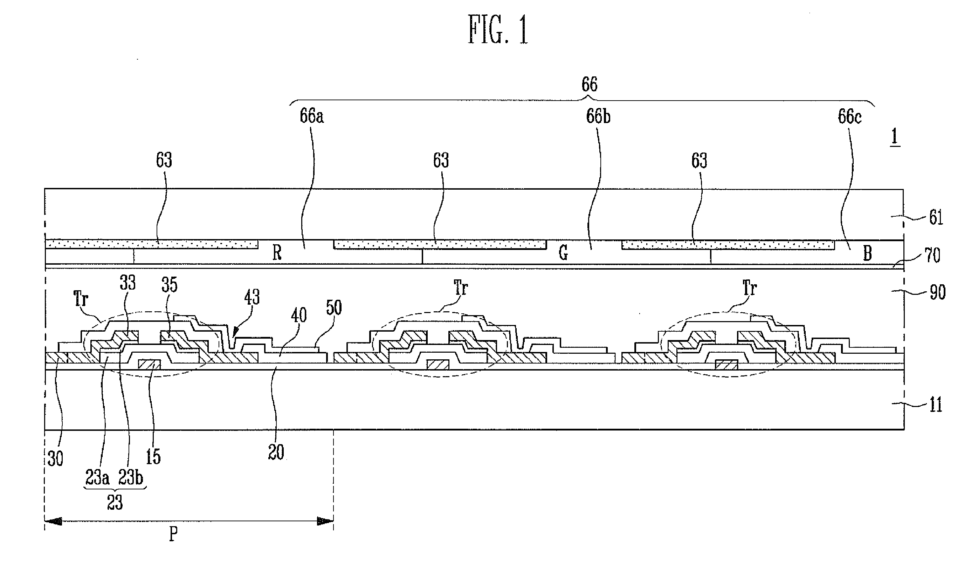

To this end, referring to the embodiment shown in FIG. 1, the LCD 1 has a configuration in which a first substrate 11 is an array substrate and a second substrate 61 is a color filter substrate, and the first and second substrates 11 and 61 are arranged to face each other with a liquid crystal layer 90 interposed therebetween. Among these substrates, the lower first substrate 11 includes a plurality of gate lines (not shown) and a plurality of data lines 30, arranged to cross each other on the top surface of the first substrate 11. Thin film transistors Tr are provided at crossing points (or crossing regions) of the gate lines and data lines, to be connected to pixel electrodes 50 formed in pixels P one by one.

In this instance, the thin film transistor Tr includes a gate electrode 15 connected to a gate line (not shown), source/drain electrodes 33 and 35, and a semiconductor layer 23 formed between the gate electrode 15 and the source/drain electrodes 33 and 35. Here, the semiconductor layer 23 includes an active layer 23a and an ohmic contact layer 23b.

A gate insulating layer 20 is formed on the gate electrode 15, and a protection layer 40 is formed on the source/drain electrodes 33 and 35. A contact hole 43 is formed in the protection layer 40 so that the drain electrode 35 is exposed therethrough.

The pixel electrode 50 is formed on a top of the protection layer 40 and is connected to the drain electrode 35 through the contact hole 43.

A lattice-shaped black matrix 63, red, green, and blue color filter patterns 66a, 66b, and 66c, and a common electrode (or transparent electrode) 70 are formed on the rear surface of the upper second substrate 61 opposite (e.g., facing) the first substrate 11. The lattice-shaped black matrix 63 surrounds each of the pixels P so as to cover a non-display area including the gate lines, the storage lines, the data lines, the thin film transistors, and the like. The red, green, and blue color filter patterns 66a, 66b, and 66c are sequentially and repeatedly arranged to correspond to the respective pixels P in the interior of the black matrix 63. The common electrode 70 is formed of a transparent conductive material and is located below the color filter patterns 66a, 66b and 66c.

An overcoat layer (not shown) may be further formed between the color filter patterns 66a, 66b and 66c and the common electrode 70.

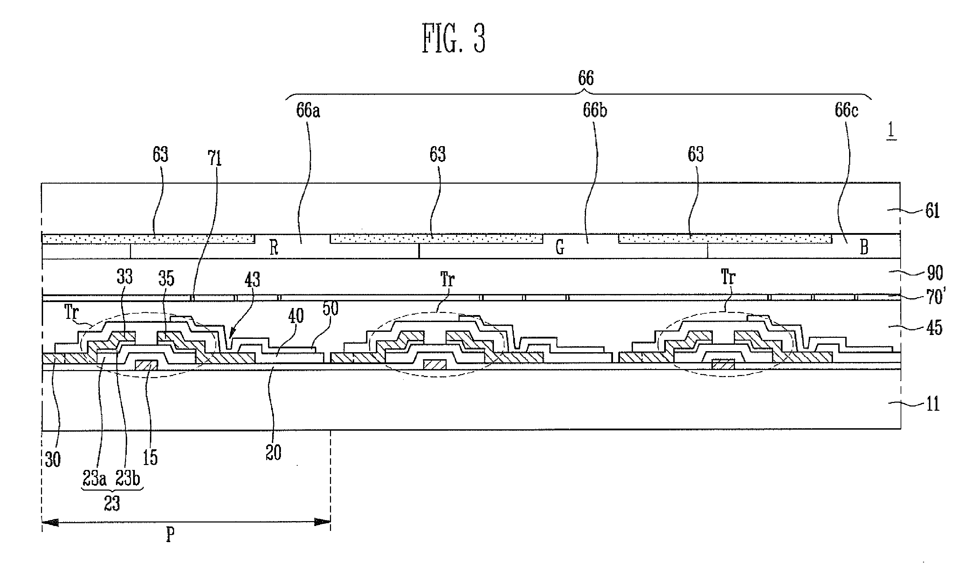

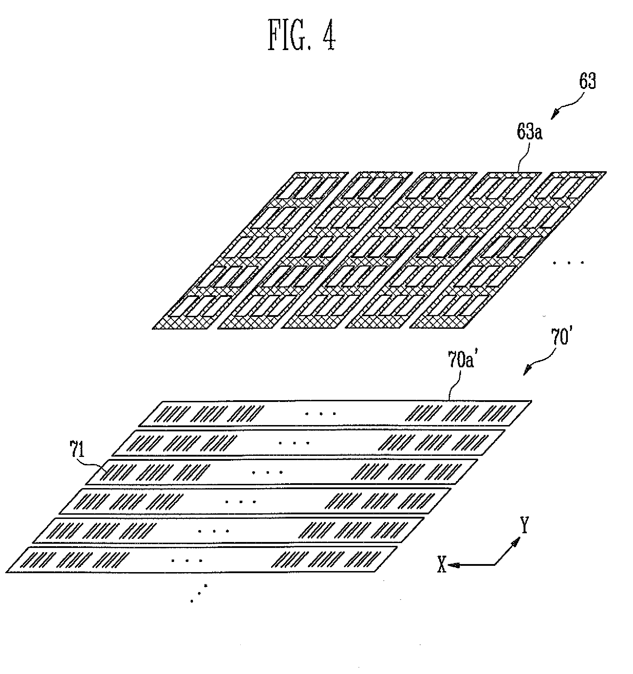

In one embodiment, the common electrode 70 is not formed on the second substrate 61 but may be formed on the first substrate 11 according to a driving method of the LCD (e.g., an in-plane switching (IPS) method, a plane line switching (PLS) method, or the like). This will be described in detail through the following embodiment illustrated in FIGS. 3 and 4.

FIG. 3 is a sectional view illustrating one area of an LCD having a built-in touch screen panel according to another embodiment of the present invention. FIG. 4 is a perspective view illustrating the structure of common electrode patterns and black matrix patterns in the LCD illustrated in FIG. 3.

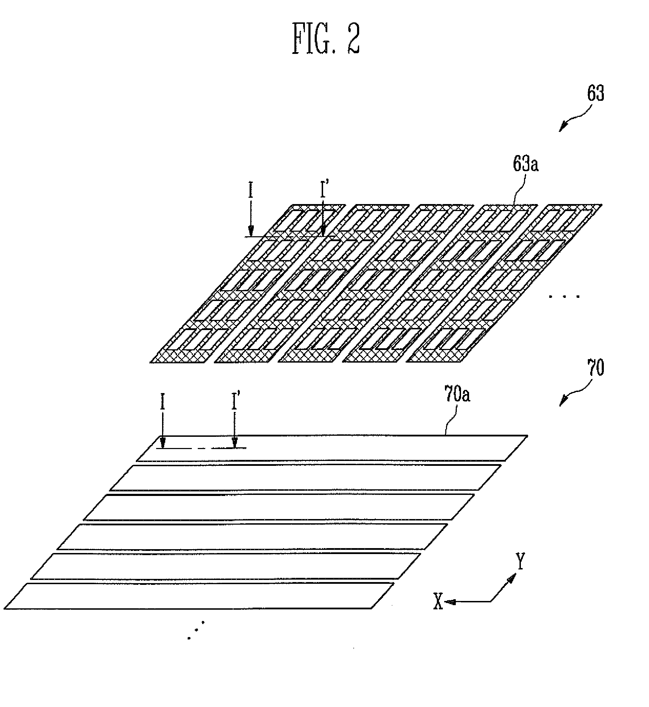

The embodiment illustrated in FIGS. 3 and 4 is different from the embodiment illustrated in FIGS. 1 and 2 in that the common electrode shown in FIGS. 3 and 4 is not formed on the upper substrate, i.e., the second substrate 61, but is instead formed on the first substrate 11. Therefore, in this embodiment, components identical to those in the embodiment illustrated in FIGS. 1 and 2 are designated by the same reference numerals, and their detailed descriptions will be omitted.

Referring to FIG. 3, the LCD is driven using a PLS method in which an image is displayed by applying a fringe electric field to liquid crystals formed between the first and second substrate. The PLS method can achieve (or obtain) a higher aperture ratio and transmittance than other driving methods.

To this end, as illustrated in FIG. 3, an insulating layer 45 is formed on the first substrate 11 having the thin film transistors Tr and the pixel electrodes 50, and a common electrode 70' is formed on the insulating layer 45.

The common electrode 70' is formed of a transparent conductive material. For example, the common electrode 70' may be formed of indium tin oxide (ITO). The common electrode 70' is positioned to correspond to each of the pixels P formed in the display area.

As illustrated in FIG. 3, the common electrode 70' has a plurality of slits 71 formed in the interior thereof so as to form a fringe electric field with the corresponding pixel electrode 50 of each of the pixels P. Although it is illustrated in FIG. 3 that three slits 71 correspond to each of the pixels P, this is only one embodiment and the number and arrangement of slits may be variously modified.

An image displaying operation of an LCD configured as described above will be briefly described as follows.

First, if a gate signal is applied to the gate electrode 15 of the thin film transistor Tr provided to each of the pixels P, the active layer 23a is activated. Accordingly, the drain electrode 35 receives a data signal applied from the data line 30 connected to the source electrode 33, through the source electrode 33 spaced apart from the drain electrode 35. Such data signal is applied at an interval (e.g., a predetermined interval) via the lower active layer 23a.

In this instance, the drain electrode 35 is electrically connected to the pixel electrode 50 through the contact hole 43. Therefore, the voltage of the data signal is applied to the pixel electrode 50.

Accordingly, the arrangement of liquid crystal molecules between the pixel electrode 50 and the common electrode 70 or 70' may be controlled according to a voltage difference between voltages respectively applied to the pixel electrode 50 and the common electrode 70 or 70', thereby displaying an image (e.g., a predetermined image).

In a conventional LCD, the common electrode 70 or 70' may be integrally formed on the entire lower surface of the second substrate 61 or the entire upper surface of the first substrate 11 so as to receive the same voltage level. The black matrix 63 is in a floating state, in which no voltage is applied.

In contrast, in the LCD according to embodiments of the present invention, the common electrode 70 or 70' and the black matrix 63 are formed as a plurality of patterns separated from one another to be used as electrodes of a mutual capacitive touch screen panel.

For example, as illustrated in FIGS. 2 and 4, a common electrode 70 or 70' may be implemented as a plurality of patterns 70a or 70a' arranged to be spaced apart at an interval (e.g., a predetermined interval) in a second direction (e.g., a Y-axis direction), and a black matrix 63 may be implemented as a plurality of patterns 63a arranged to be spaced apart at an interval (e.g., a predetermined interval) in a first direction (e.g., an X-axis direction) crossing (or intersecting) the second direction.

In this instance, the black matrix 63 may be made of a colored conductive material. For example, the black matrix 63 may be formed of chrome (Cr) and/or chrome oxide (CrOx).

In the embodiment of FIG. 2, the color filter pattern 66 (shown in FIG. 1) formed between the common electrode patterns 70a and the black matrix patterns 63a may serve as a dielectric substance. In the embodiment of FIG. 4, the liquid crystal layer 90 (shown in FIG. 3) formed between the common electrode patterns 70a' and the black matrix patterns 63a may serve as a dielectric substance.

In the embodiment of FIG. 4, the common electrode patterns 70a' are provided with a plurality of slits 71 in the region corresponding to each of the pixels, so as to implement PLS driving.

Thus, the common electrode patterns 70a or 70a' may be operated as driving electrodes of a mutual capacitive touch screen panel, and the black matrix patterns 63a may be operated as sensing electrodes of the mutual capacitive touch screen panel.

Mutual capacitances (C_{M}) between the driving and sensing electrodes 70a and 63a may be respectively formed at crossing points (or crossing regions) of the driving electrodes 70a and the sensing electrodes 63a. The crossing points (or crossing regions) at which the mutual capacitances are formed serve as sensing cells for implementing touch recognition.

In a case where a driving signal is applied to the driving electrode 70a or 70a' connected to each of the sensing cells, the mutual capacitance generated in each of the sensing cells generates a sensing signal, which is coupled to the sensing electrode 63a connected to each of the sensing cells.

The driving signal is sequentially applied to the driving electrodes 70a or 70a' during one frame period. Therefore, if the driving signal is applied to any one of the driving electrodes, the other driving electrodes maintain a ground state.

Thus, mutual capacitances may be respectively formed at a plurality of crossing points (or crossing regions), i.e., sensing cells, by a plurality of sensing lines crossing the driving line to which the driving signal is applied. In a case where a finger or the like comes in contact with one or more of the sensing cells, a change in capacitance is generated in the corresponding sensing cell, and the change in capacitance is sensed.

Through the configuration described above, in one embodiment an LCD can be implemented in which a mutual capacitive touch screen panel is built.

In one embodiment, the same voltage level is applied to the first electrode patterns 70a or 70a' during a first frame period in which the LCD performs an operation for displaying an image, and a driving signal is sequentially applied to the first electrode patterns 70a or 70a' during a second frame period in which the LCD performs touch recognition.

The LCD may be implemented so that the first and second frame periods are not overlapped with each other. For example, the first and second frame periods may be alternately repeated.

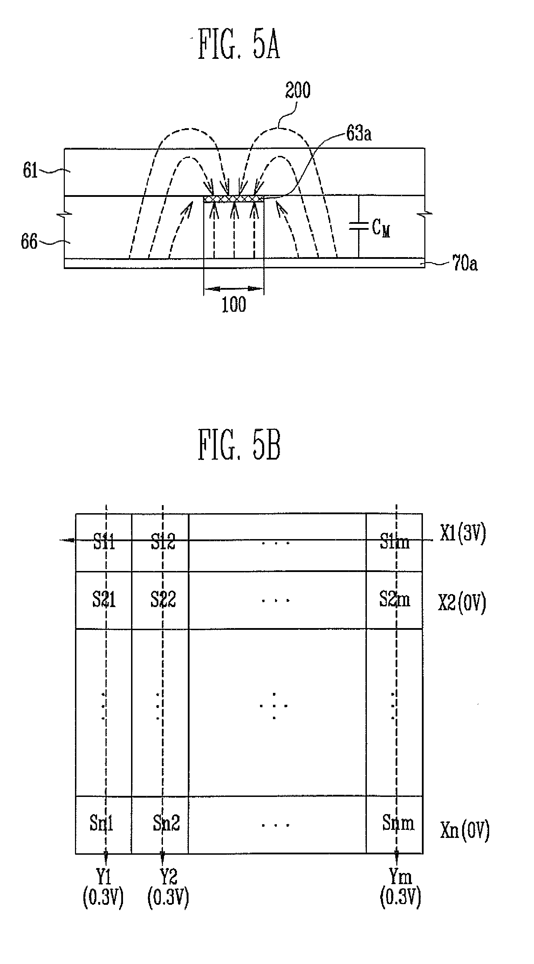

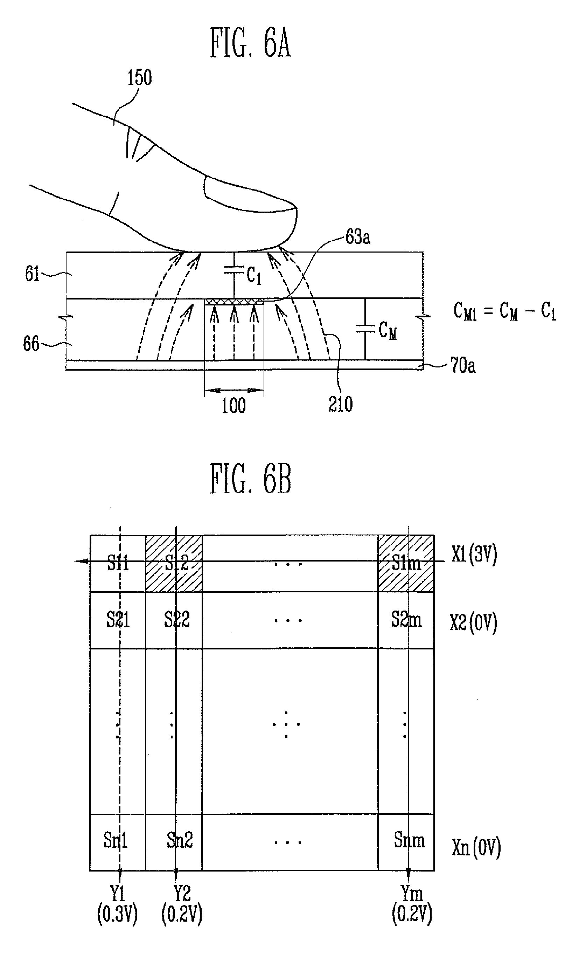

Hereinafter, the operation of a mutual capacitive touch screen panel will be described in detail with reference to FIGS. 5A, 5B, 6A, and 6B.

FIG. 5A is a sectional view of a sensing cell in a normal state (or no touch condition). FIG. 5B is a view schematically showing a sensed result based on a driving signal applied to sensing cells such as the sensing cell shown in FIG. 5A.

Here, FIG. 5A is a sectional view taken along the line I-I' of FIG. 2, illustrating a region of the perspective view illustrated in FIG. 2.

Referring to FIG. 5A, there are shown electric field lines 200 for mutual capacitances between a driving electrode 70a and a sensing electrode 63a. The driving electrode 70a and the sensing electrode 63a are separated from each other by a color filter pattern 66, which serves as a dielectric substance.

Here, the driving electrode 70a is one of the common electrode patterns arranged to be separated from one another as described above, and the sensing electrode 63a corresponds to a black matrix pattern crossing the common electrode pattern.

In one embodiment the sensing electrode 63a is formed on a bottom surface of the second substrate 61 as shown in FIG. 5A.

In this instance, the point (or region) at which the driving and sensing electrodes 70a and 63a are crossing each other is a sensing cell 100. As shown in FIG. 5A, a mutual capacitance C_{M} is formed between the driving and sensing electrodes 70a and 63a corresponding to the sensing cell 100.

The mutual capacitance C_{M} generated in each of the sensing cells 100 is generated when a driving signal is applied to the driving electrode 70a connected to each of the sensing cells 100.

That is, referring to FIG. 5B, a driving signal (e.g., a voltage of 3V) is sequentially applied to each of the driving electrodes X1 to Xn. When the driving signal is applied to any one of the driving electrodes X1 to Xn, the other driving electrodes maintain a ground state. In reference to FIG. 58, an example in which the driving signal is applied to the first driving electrode X1 will be described.

Thus, mutual capacitances may be respectively formed at a plurality of crossing points (or crossing regions), i.e., sensing cells S11 to S1m, by a plurality of sensing electrodes Y1 to Ym crossing the first driving electrode X1 to which the driving signal is applied. Accordingly, a voltage (e.g., 0.3V) corresponding to the mutual capacitance is sensed from sensing electrodes Y1 to Ym connected to each of the sensing cells to which the driving signal is applied.

FIG. 6A is a sectional view of a sensing cell in the condition of being contacted by a finger. FIG. 6B is a view schematically showing a sensed result based on a driving signal applied to sensing cells such as the sensing cell shown in FIG. 6A.

Referring to FIG. 6A, when a finger 150 contacts at least one sensing cell 100, the finger is a low impedance object and there is an AC capacitance C₁ between the sensing electrode 63a and a human body. The human body has a self capacitance of about 200pF with respect to ground, and the self capacitance is much greater than the capacitance C₁.

In a case where an electric field line 210 between the driving and sensing electrodes 70a and 63a is shielded due to the contact of the finger 150, the electric field line 210 is branched to the ground through a capacitance path that exists in the finger 150 and the human body, and as a result, the mutual capacitance C_{M} in the normal state shown in FIG. 3A is decreased by the capacitance C₁ (C_{M1}=C_{M}-C₁).

Also, the change in mutual capacitance in each of the sensing cells 100 changes the voltage provided to the sensing electrode 63a connected to the sensing cell 100.

That is, as illustrated in FIG. 6B, a driving signal (e.g., a voltage of 3V) is sequentially applied to each of the driving electrodes X1 to Xn, so that mutual capacitances C_{M} are respectively formed in the plurality of sensing cells S11 to S1 m by the plurality of sensing lines Y1 to Ym crossing the first driving electrode X1 to which the driving signal is applied. In a case where one or more sensing cells (e.g., S12 and S1m) are contacted by the finger 150, the mutual capacitance is decreased, and therefore, a voltage (e.g., 0.1V) corresponding to the decreased mutual capacitance C_{M1} is sensed from sensing electrodes Y2 and Ym respectively connected to the contacted sensing cells S12 and S1 m.

However, since the existing mutual capacitance C_{M} is maintained in the other sensing cells which are connected to the first driving electrode X1 but are not contacted by the finger 150, the existing voltage (e.g., 0.3V) is sensed from sensing electrodes respectively connected to the other sensing cells.

That is, a precise touch position can be sensed through the difference between voltages applied to the sensing electrodes.

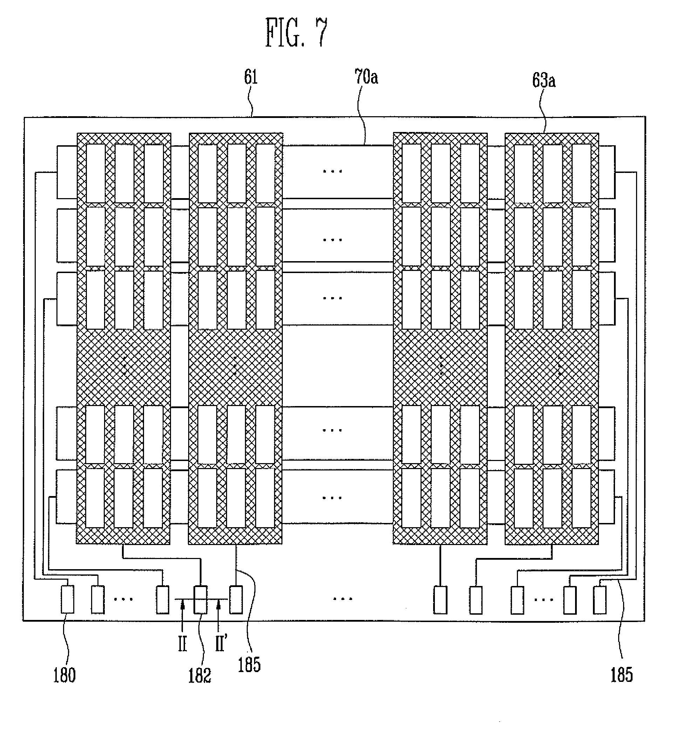

FIG. 7 is a plan view illustrating a second substrate in an LCD having a built-in touch screen panel according to an embodiment of the present invention.

In FIG. 7, the embodiment illustrated in FIGS. 1 and 2, i.e., the structure in which the common electrode patterns are formed on the second substrate, is described as an example. However, the embodiment is not limited thereto. That is, the common electrode patterns may be formed on the first substrate as described in the embodiment illustrated in FIGS. 3 and 4.

For convenience of illustration, only common electrode patterns (driving electrodes) and black matrix patterns (sensing electrodes) which constitute the touch screen panel on the second substrate of the LCD are shown in FIG. 7.

Referring to FIG. 7, a plurality of common electrode patterns (driving electrodes) 70a and black matrix patterns (sensing electrodes) 63a are formed to cross each other on a second substrate 61 of the LCD.

Voltage application pads 180 corresponding to respective common electrode patterns (driving electrodes) 70a, and voltage detection pads 182 corresponding to respective black matrix patterns (sensing electrodes) 63a are formed on the second substrate 61. The common electrode patterns (driving electrodes) 70a are connected to the pads 180 and the black matrix patterns (sensing electrodes) 63a are connected to the pads 182 by connection lines 185.

In this instance, the pads 180 and 182 are formed on the bottom surface of the second substrate 61. Therefore, in a case where a flexible printed circuit board (FPCB, not shown) for applying a signal (e.g., a predetermined signal) to the pads 180 is formed on the first substrate 11, the pads 180 and 182 are electrically connected to the FPCB.

Accordingly, in one embodiment, the pads 180 and 182 formed on the bottom surface of the second substrate 61 and metal patterns (not shown) electrically connected to the FPCB attached to one surface of the first substrate 11 are electrically connected using a sealing member (not shown) formed in an outer region so that the first and second substrates 11 and 61 are joined together.

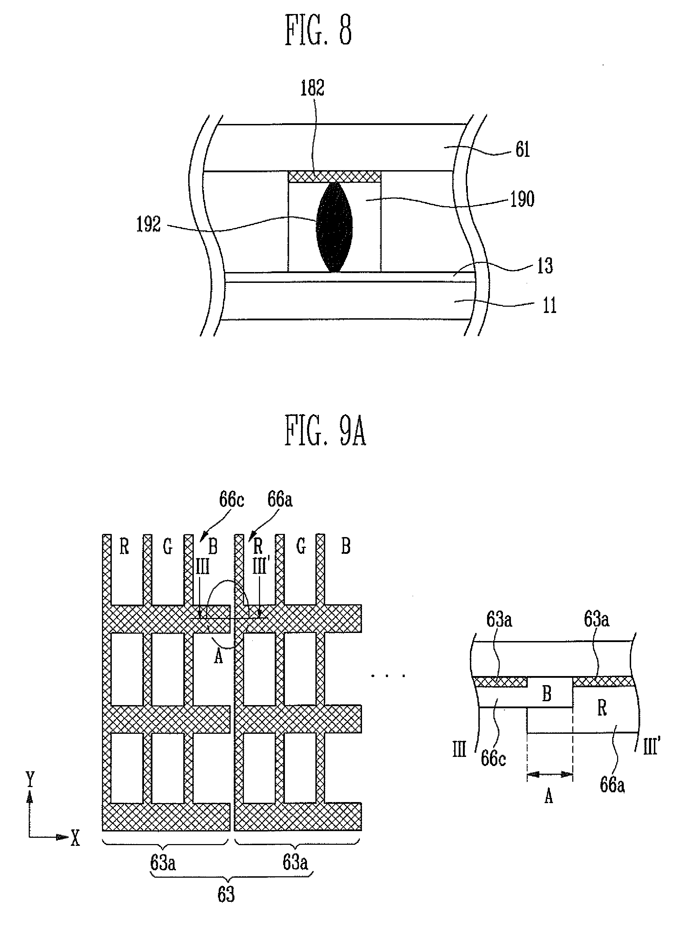

FIG. 8 is a sectional view taken along the line II-II' of FIG. 7 illustrating a specific area, i.e., an electrical connection between a voltage application pad and a metal pattern of a first substrate according to an embodiment of the present invention.

As described above, the common electrode patterns (driving electrodes) 70a may be formed on the first substrate 11. In this case, the voltage application pads 180 are formed on the first substrate 11, and therefore, a voltage detection pad 182 formed on the second substrate 61 will be described as a target in FIG. 8.

Referring to FIG. 8, the pad 182 formed on the bottom surface of the second substrate 61 is electrically connected to a metal pattern 13 formed on the first substrate 11, through a sealing member 190. To this end, the sealing member 190 contains conductive material such as a conducting ball 192, and one side of the conducting ball 192 contacts the pad 182 and another side of the conducting ball 192 contacts the metal pattern 13.

The metal pattern 13 is electrically connected to the FPCB (not shown) attached to one surface of the first substrate 11. Consequently, the pad 182 formed on the second substrate 61 is electrically connected to the FPCB positioned on the first substrate 11.

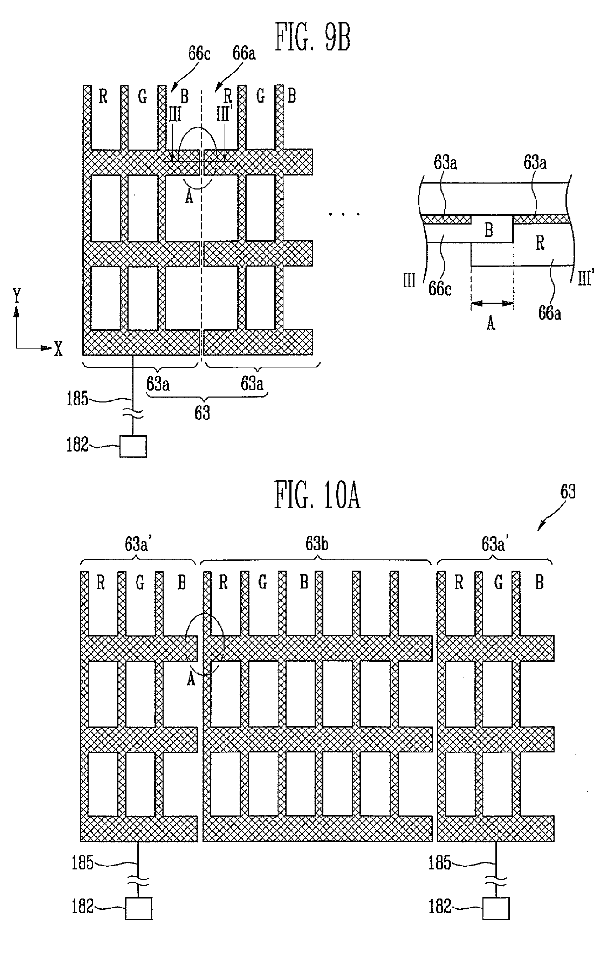

FIGS. 9A and 9B illustrate plan views and sectional views taken along the line III-III' illustrating shapes of black matrix patterns according to an embodiment of the present invention.

In this embodiment, as illustrated in FIGS. 9A and 9B, the black matrix is separated at an interval (e.g., a predetermined interval) so as to be formed as a plurality of patterns.

In this case, image quality degradations such as light leakage or stripe stain may occur in an open region A created (or opened) by separating the black matrix.

In order to solve such a problem, in one embodiment, adjacent color patterns are formed to be overlapped with each other in the open region A.

That is, if adjacent blue and red color filter patterns 66c and 66a are formed to be overlapped with each other in the open region A, an optical black effect appears at the overlapped portion of the blue and red color filter patterns 66c and 66a. Thus, it is possible to overcome the image quality degradation that occurs due to the opened black matrix.

The shape of the color filter patterns overlapped with each other may be varied (or changed) depending on the structure of the black matrix that is separated. FIG. 9A shows a black matrix opened in the direction of the black matrix on the X-axis. In FlG. 9A, the adjacent red color filter pattern 66a includes a protrusion extending into the open region A so as to cover the open region A. The adjacent blue color filter pattern 66c also includes a portion in the open region A that is overlapped with the protrusion of the red color filter pattern 66a. In other embodiments, the blue color filter pattern 66c may have a protrusion extending into the region A and the red color filter pattern 66a may have an overlapped portion in the region A.

FIG. 9B shows a black matrix opened in the direction of the black matrix on the Y-axis. In this case, the shape of the color filter pattern is identical to that in FIG. 9A. However, the width of the color filter patterns adjacent to the open region are formed wide to include the open region, so that the color filter patterns adjacent to the open region are overlapped with each other. In other words, because the portion of the black matrix extending in the Y-axis direction is not present at a position passing through the region A, the red and blue color filter patterns 66a and 66c overlap each other along the Y-axis direction to block light as though the black matrix is present along the Y-axis direction. Such overlap along the Y-axis direction may also be present in the embodiment of FIG. 9A.

In the embodiments illustrated in FIGS. 9A and 9B, each of the black matrix patterns 63a operated as sensing electrodes is implemented to have a width corresponding to a pixel (e.g., a pixel unit) including the red, green, and blue color filter patterns. However, the present invention is not limited thereto.

That is, for example, when ten sensing electrodes (or channels) of the touch screen panel are required, the entire black matrix is separated into ten black matrix patterns, so that the separated black matrix patterns may be used as the respective sensing electrodes.

If the black matrix is separated into ten black matrix patterns having the same width, the width of each of the black matrix patterns 63a as the sensing electrodes is considerably widened, and the interval between adjacent black matrix patterns is considerably narrowed. Therefore, it may be difficult to operate the black matrix patterns as normal sensing electrodes.

Accordingly, in the following embodiment, the black matrix is separated into first black matrix patterns as sensing electrodes and dummy black matrix patterns positioned between the respective first black matrix patterns.

FIGS. 10A to 10C are views illustrating shapes of black matrix patterns according to another embodiment of the present invention.

Referring to FIG. 10A, a black matrix 63 is separated into first black matrix patterns 63a' and dummy black matrix patterns 63b. Here, the first black matrix patterns 63a' are operated as sensing electrodes and electrically connected to voltage detection pads 182. Voltage is not applied to the dummy black matrix patterns 63b in a floating state, or ground voltage GND may be applied to the dummy black matrix patterns 63b.

That is, only some black matrix patterns 63a' of the plurality of black matrix patterns 63a' and 63b are used as sensing electrodes, so that the interval between the sensing electrodes can be sufficiently spaced. The dummy black matrix patterns 63b perform the function of preventing light from being transmitted therethrough.

Thus, the voltage detection pads 182 are respectively electrically connected to the first black matrix patterns 63a' used as the sensing electrodes. Voltage is not applied to the dummy black matrix patterns 63b in a floating state, or ground voltage GND may be applied to the dummy black matrix patterns 63b.

The ground voltage applied to the dummy black matrix patterns 63b is applied during a time when a touch signal is not sensed, i.e., in a period when the sensing electrodes are not operated, so that it is possible to implement a structure that can withstand static electricity supplied from the exterior without having influence on the touch sensitivity.

In the case of the embodiment illustrated in FIG. 10A, adjacent color filter patterns are formed to be overlapped with each other in the region A opened by separating the black matrix as illustrated in FIGS. 9A and 9B, so that it is possible to overcome the image quality degradation in the open region A.

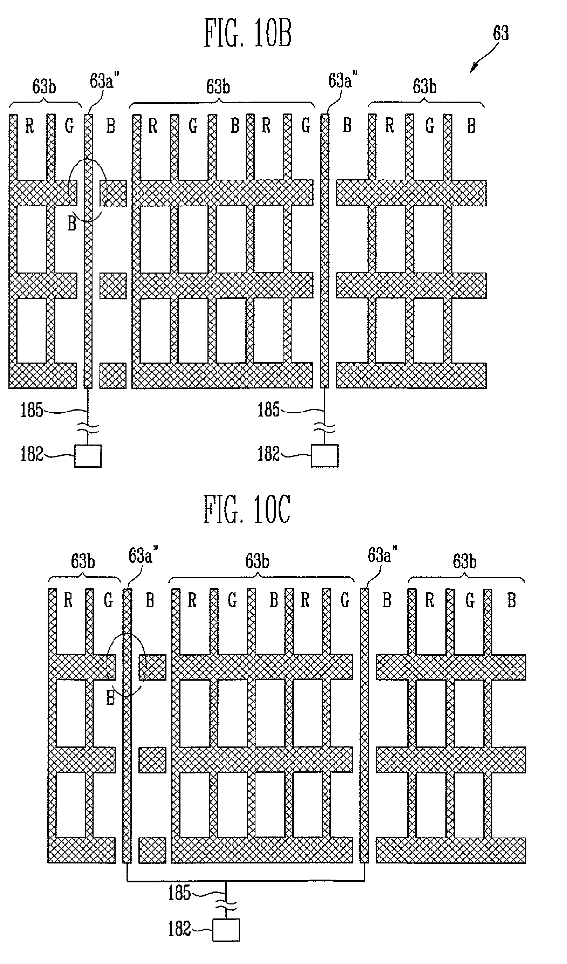

Referring to FIG. 10B, the first black matrix patterns operated as the sensing electrodes may be implemented as only one line positioned in the second direction (e.g., a Y-axis direction), i.e., a black matrix line 63a" provided between adjacent color filter patterns (e.g., green (G) and blue (B) color filter patterns). The other black matrix patterns are (or become) dummy black matrix patterns 63b.

In one embodiment, the width of the black matrix line 63a" is about 6 to 7*µ*m, which is relatively (e.g., considerably) thin, and therefore, there is a disadvantage in view of touch sensitivity. In order to solve such a problem, at least two or more adjacent black matrix lines 63a" spaced apart at an interval (e.g., a predetermined interval) may be grouped as a sensing electrode as illustrated in FIG. 10C.

In the embodiment of FIG. 10C, the adjacent black matrix lines 63a" are connected to the same voltage detection pad 182 through the same connection line 185 so as to be operated as one sensing electrode.

In the embodiment illustrated in FIGS. 10B and 10C, adjacent color filter patterns are formed to be overlapped with each other in the region B, which is opened by separating the black matrix as illustrated in FIGS. 9A and 9B, so that it is possible to overcome the image quality degradation in the open region B.

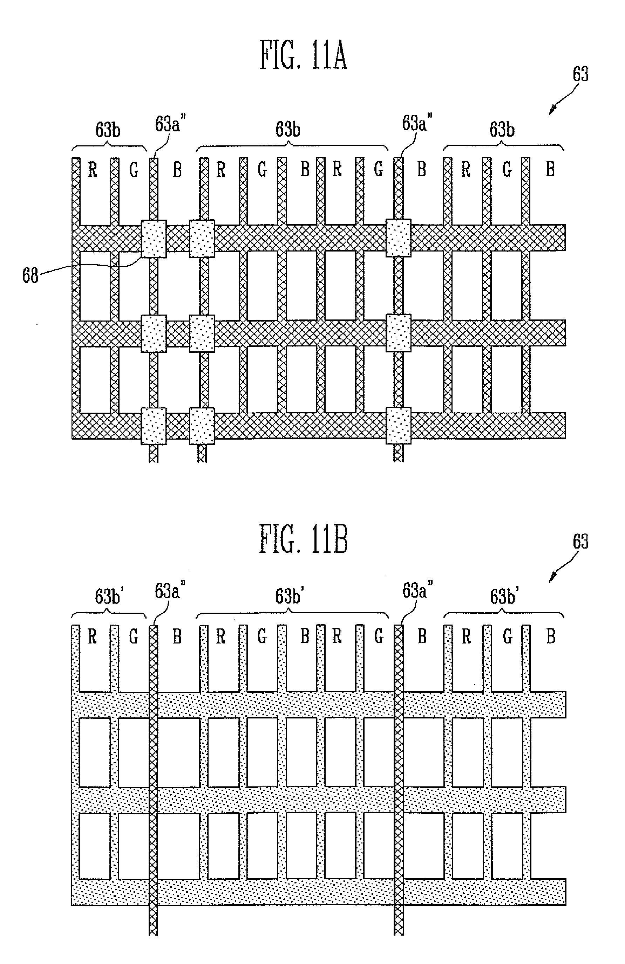

FIGS. 11A and 11 B are views illustrating shapes of black matrix patterns according to still another embodiment of the present invention.

Referring to FIG. 11A, this embodiment corresponds to the embodiment illustrated in FIG. 10B. In FIG. 11A, a black matrix pattern 68 made of a conductive organic material is additionally formed in region B opened by separating the black matrix, so as to prevent image quality degradation such as light leakage.

Referring to FIG. 11 B, this embodiment also correspond to the embodiment illustrated in FIG. 10B. Since the number and area of black matrix lines 63a" operated as the sensing electrodes are much smaller than those of dummy black matrix patterns 63b', only the black matrix lines 63a" may be formed of a colored conductive material (e.g., chrome (Cr) and/or chrome oxide (CrOx)), and the dummy black matrix patterns 63b' may be formed of a non-conductive organic material. Thus, the black matrix is not further separated so as to form the black matrix lines 63a", and accordingly, it is possible to avoid (or remove) the open region B in advance.

While the present invention has been described in connection with certain embodiments, it is to be understood that the invention is not limited to the disclosed embodiments, but, on the contrary, is intended to cover various modifications and equivalent arrangements included within the scope of the appended claims, and equivalents thereof.

## Claims

1. A liquid crystal display (LCD) having a built-in touch screen panel, the LCD comprising:
a first substrate having a plurality of pixels, wherein each of the pixels comprises a thin film transistor and a pixel electrode;
a plurality of common electrode patterns corresponding to the pixel electrodes and spaced from each other along a second direction;
a second substrate facing the first substrate, the second substrate having color filter patterns, wherein the color filter patterns are arranged to correspond to the pixels;
a plurality of black matrix patterns between the color filter patterns, the plurality of black matrix patterns being spaced from each other along a first direction crossing the second direction; and
a liquid crystal layer between the first and second substrates,
wherein the plurality of common electrode patterns and at least one of the black matrix patterns are used as driving electrodes and sensing electrodes, respectively.

2. An LCD according to claim 1, wherein the black matrix patterns comprise first black matrix patterns and dummy black matrix patterns between the first black matrix patterns.

3. An LCD according to claim 2, wherein the dummy black matrix patterns are maintained in a floating state, or a ground voltage (GND) is applied to the dummy black matrix patterns.

4. An LCD according to claim 2, or 3, further comprising:
voltage application pads coupled to the plurality of common electrode patterns; and
voltage detection pads coupled to the first black matrix patterns.

5. An LCD according to claim 4, wherein at least one of the voltage application pads or the voltage detection pads is on a surface of the second substrate facing the first substrate.

6. An LCD according to claim, 5, wherein the at least one of the voltage application pads or the voltage detection pads is electrically connected to a metal pattern on the first substrate through a sealing member.

7. An LCD according to claim 6, wherein the sealing member comprises a conductive material, and one side of the conductive material contacts a corresponding one of the pads and another side of the conductive material contacts the metal pattern.

8. An LCD according to claim 7, wherein the conductive material comprises a conducting ball.

9. An LCD according to claim 7 or 8, wherein the metal pattern is electrically connected to a flexible printed circuit board attached to one surface of the first substrate.

10. An LCD according to one of claims 2 to 9, wherein the first black matrix patterns are between adjacent ones of the color filter patterns, and are configured to be implemented as black matrix lines that are spaced from each other along the first direction.

11. An LCD according to claim 10, wherein two or more of the black matrix lines are coupled to a same voltage application pad so as to be operated as one sensing electrode.

12. An LCD according to one of claim 2 to 11, wherein the first black matrix patterns comprise an opaque conductive material, and the dummy black matrix patterns comprise an opaque conductive material or opaque organic material.

13. An LCD according to claim 12, wherein the opaque conductive material comprises chrome (Cr) or chrome oxide (CrOx).

14. An LCD according to any preceding claim, wherein adjacent ones of the color filter patterns are overlapped with each other in an open region between the black matrix patterns.

15. An LCD according to any preceding claim, further comprising an additional black matrix pattern made of a non-conductive organic material formed in an open region between the black matrix patterns so as to be overlapped with the open region.

16. An LCD according to any preceding claim, wherein the plurality of common electrode patterns is on the second substrate.

17. An LCD according to claim 16, wherein the color filter patterns between the plurality of common electrode patterns and the plurality of black matrix patterns serve as a dielectric substance.

18. An LCD according to any one of claims 1 to 15, wherein the plurality of common electrode patterns is on the first substrate.

19. An LCD according to claim 18, wherein at least one slit is at a region of the common electrode patterns corresponding to the pixel electrode of each of the pixels.

20. An LCD according to claim, 18 or 19, wherein the liquid crystal layer is between the plurality of common electrode patterns and the black matrix patterns, and serves as a dielectric substance.

21. An LCD according to any preceding claim, wherein the LCD is configured to perform an operation of displaying an image during a first frame period, and to perform an operation of recognizing a touch during a second frame period, and
wherein a same voltage is applied to the common electrode patterns during the first frame period and a driving signal is sequentially applied to the common electrode patterns during the second frame period.

22. An LCD according to claim 21, wherein the first and second frame periods are sequentially and repeatedly operated.
